# EUROPEAN PATENT APPLICATION

(11) **EP 4 529 805 A1**
(43) Date of publication of application: **02.04.2025**
(21) Application number: 24198771.8
(22) Date of filing: 05.09.2024
(51) Int. Cl.: A45F 3/18, A47G 19/00, B65D 51/24, F16B 45/02

(54) **CAP UNIT AND CAPPED CONTAINER**

(30) Priority: 27.09.2023 JP 2023166212
(71) Applicant: Thermos L.L.C., Schaumburg, IL 60173 (US); Thermos K.K., Tsubame-shi, Niigata-ken (JP)
(72) Inventor: MURATA, Takeshi, Niigata-ken (JP); MARUYAMA, Takahiro, Niigata-ken (JP); TANIGUCHI, Takuma, Niigata-ken (JP)
(74) Representative: Barker Brettell LLP

(57) **Abstract**

A capped container that prevents a carabiner handle and hinge part from being damaged includes a ring-shaped body 8 with an opening 8a that is partially opened and a gate 9 that opens and closes the opening 8a, wherein the base end of the gate 9 is swingably attached to the body 8 via an opening/closing base end part 10 on one end side across the opening 8a, a concave notch part 11 consisting of a cutout part cutting the inner peripheral surface of the body 8 is provided on the other end side across the opening 8a, and the notch part 11 is provided with an inclined surface 11a inclined in a direction away from the tip of the gate 9 toward the side on which the cutout part opens.

## Description

### [Technical Field]

This invention relates to a cap unit and a capped container.

### [Background Art]

Conventionally, capped containers have existed that are equipped with a cap unit which can be detachably attached to the container body with an upper opening. For example, a capped container exists that includes a ring member attached to the outer peripheral part of the upper side of the container body, a carabiner attached to the ring member, and a cap unit that is detachably attached to the container body (see Patent Document 1 below).

Additionally, as another example, a capped container exists that includes a cap unit detachably attached to the container body and a handle member (handle component) that is rotatably integrated with the cap unit via a hinge part (see Patent Document 2 below).

With such capped containers, the carabiner or handle member allows for easy carrying of the capped container.

Patent documents in the technological field include PCT International Application Publication No. 2022-514610 (document 1) and Japanese Patent No. 6760665 (document 2).

However, with a cap unit equipped with a hinge-rotating carabiner handle, when a strong impact is applied, such as when the carabiner handle is dropped facing downward, the load applied to the carabiner handle or hinge part can cause them to break.

Particularly if the body of the carabiner handle is made of synthetic resin, it is less strong than metal versions, so the risk of damage increases. Therefore, a structure is required to prevent the carabiner handle and hinge part from being damaged due to impact.

The present invention has been created in view of the abovementioned problems, with the object of providing a cap unit and capped container that prevent the carabiner handle and hinge part from being damaged when an impact, etc. is applied to the carabiner handle.

In order to achieve the abovementioned purpose, the present invention provides the following means.
[1] A cap unit detachably attached to a container body with an upper opening, comprising:
   a cap body that closes the upper opening of the container body; and
   a carabiner handle rotatably attached to the cap body via a hinge part,
   wherein the carabiner handle includes a ring-shaped body with an opening that is partially opened and a gate that opens and closes the opening,
   the base end of the gate is swingably attached to the body via an opening/closing base end part on one end side across the opening,
   a concave notch part consisting of a cutout part cutting the inner peripheral surface of the body is provided on the other end side across the opening,
   the gate is biased to one side in the swing direction, with the tip side of the gate engaged with the notch part such that the gate closes the opening,
   by rotating the gate to the other side in the rotational direction against the bias, the engagement with the notch part is released such that the gate opens the opening, and
   the notch part is provided with an inclined surface inclined in the direction away from the tip of the gate toward the side at which the cutout part opens.
[2] A cap unit detachably attached to a container body with an upper opening, comprising:
   a cap body that closes the upper opening of the container body; and
   a carabiner handle rotatably attached to the cap body via a hinge part,
   wherein the carabiner handle includes a ring-shaped body with an opening that is partially opened and a gate that opens and closes the opening,
   the base end of the gate is swingably attached to the body via an opening/closing base end part on one end side across the opening,
   a concave notch part consisting of a cutout part cutting the inner peripheral surface of the body is provided on the other end side across the opening,
   the gate is biased to one side in the swing direction, with the tip side of the gate engaged with the notch part such that the gate closes the opening,
   by swinging the gate to the other side in the swing direction against the bias, the engagement with the notch part is released such that the gate opens the opening, and
   the notch part is provided with a hook part that locks the tip side of the gate.
[3] The cap unit according to [1] or [2], wherein the body is made of synthetic resin.
[4] A capped container comprising: the cap unit according to [1] or [2]; and
   a container body to which the cap unit is attached.
[5] A capped container comprising: a container body with an upper opening;
   a shoulder member attached to the outer peripheral part of the upper side of the container body;
   a cap unit detachably attached to the container body or the shoulder member; and
   a carabiner handle rotatably attached to the shoulder member via a hinge part,
   wherein the carabiner handle includes a ring-shaped body with an opening that is partially opened and a gate that opens and closes the opening,
   the base end of the gate is swingably attached to the body via an opening/closing base end part on one end side across the opening,
   a concave notch part consisting of a cutout part cutting the inner peripheral surface of the body is provided on the other end side across the opening,
   the gate is biased to one side in the swing direction, with the tip side of the gate engaged with the notch part such that the gate closes the opening,
   by swinging the gate to the other side in the swing direction against the bias, the engagement with the notch part is released such that the gate opens the opening, and
   the notch part is provided with an inclined surface inclined in the direction away from the tip of the gate toward the side at which the cutout part opens.
[6] A capped container comprising: a container body with an upper opening;
   a shoulder member attached to the outer peripheral part of the upper side of the container body;
   a cap unit detachably attached to the container body or the shoulder member; and
   a carabiner handle rotatably attached to the shoulder member via a hinge part,
   wherein the carabiner handle includes a ring-shaped body with an opening that is partially opened and a gate that opens and closes the opening,
   the base end of the gate is swingably attached to the body via an opening/closing base end part on one end side across the opening,
   a concave notch part consisting of a cutout part cutting the inner peripheral surface of the body is provided on the other end side across the opening,
   the gate is biased to one side in the swing direction, with the tip side of the gate engaged with the notch part such that the gate closes the opening,
   by swinging the gate to the other side in the swing direction against the bias, the engagement with the notch part is released such that the gate opens the opening, and
   the notch part is provided with a hook part that locks the tip side of the gate.
[7] The capped container according to [5] or [6], wherein the body is made of synthetic resin.

As mentioned above, the present invention enables the provision of a cap unit and capped container that prevent a carabiner handle and hinge part from being damaged when an impact, etc. is applied to the carabiner handle.

### Brief Description of Drawings

Fig. 1 is a perspective view illustrating the handle member of a capped container according to Embodiment 1 of the present invention positioned on one side in the rotational direction.
Fig. 2 is a rear view illustrating the handle member of the capped container illustrated in Fig. 1 positioned on the other side in the rotational direction.
Fig. 3 is a transparent perspective view illustrating the handle member temporarily fixed to the shoulder member by the temporary fixing mechanism of the capped container illustrated in Fig. 1.
Fig. 4 is a transparent perspective view illustrating the state before the handle member is temporarily fixed to the shoulder member by the temporary fixing mechanism illustrated in Fig. 3.
Fig. 5 is a transparent perspective view illustrating the handle member temporarily fixed to the shoulder member by the temporary fixing mechanism illustrated in Fig. 3, viewed from a different angle than Fig. 3.
Fig. 6 is a perspective view illustrating the configuration in which the engaging protrusion, which constitutes the temporary fixing mechanism illustrated in Fig. 3, is disposed on the shoulder member side via the hinge part.
Fig. 7 is a cross-sectional perspective view illustrating the configuration in which the engaging recess and spring member, which constitute the temporary fixing mechanism illustrated in Fig. 3, are disposed on the handle member side via the hinge part.
Fig. 8 is a rear view of a capped container illustrating another configuration of the handle member.
Fig. 9 is a transparent perspective view illustrating the handle member temporarily fixed to the shoulder member by the temporary fixing mechanism of a capped container according to Embodiment 2 of the present invention.
Fig. 10 is a transparent perspective view illustrating the state before the handle member is temporarily fixed to the shoulder member by the temporary fixing mechanism illustrated in Fig. 9.
Fig. 11 is a transparent perspective view illustrating the handle member temporarily fixed to the shoulder member by the temporary fixing mechanism illustrated in Fig. 9, viewed from a different angle than Fig. 9.
Fig. 12 is a perspective view illustrating the configuration in which the engaging protrusion, which constitutes the temporary fixing mechanism illustrated in Fig. 9, is disposed on the shoulder member side via the hinge part.
Fig. 13 is a cross-sectional perspective view illustrating the configuration in which the engaging recess and spring member, which constitute the temporary fixing mechanism illustrated in Fig. 9, are disposed on the handle member side via the hinge part.
Fig. 14 is a cross-sectional perspective view illustrating the handle member temporarily fixed to the shoulder member by the temporary fixing mechanism of a capped container according to Embodiment 3 of the present invention.
Fig. 15 is a cross-sectional perspective view illustrating the state before the handle member is temporarily fixed to the shoulder member by the temporary fixing mechanism illustrated in Fig. 14.
Fig. 16 is a transparent perspective view illustrating the handle member temporarily fixed to the shoulder member by the temporary fixing mechanism illustrated in Fig. 14, viewed from a different angle than Fig. 14.
Fig. 17 is a perspective view illustrating the configuration in which the engaging protrusion, which constitutes the temporary fixing mechanism illustrated in Fig. 14, is disposed on the shoulder member side via the hinge part.
Fig. 18 is a cross-sectional perspective view illustrating the configuration in which the engaging recess and spring member, which constitute the temporary fixing mechanism illustrated in Fig. 14, are disposed on the handle member side via the hinge part.
Fig. 19 is a transparent perspective view illustrating the handle member temporarily fixed to the shoulder member by the temporary fixing mechanism of a capped container according to Embodiment 4 of the present invention.
Fig. 20 is a transparent perspective view illustrating the state before the handle member is temporarily fixed to the shoulder member by the temporary fixing mechanism illustrated in Fig. 19.
Fig. 21 is a perspective view illustrating the configuration in which the engaging protrusion, which constitutes the temporary fixing mechanism illustrated in Fig. 19, is disposed on the shoulder member side via the hinge part.
Fig. 22 is a perspective view illustrating the configuration in which the engaging recess and spring member, which constitute the temporary fixing mechanism illustrated in Fig. 19, are disposed on the handle member side via the hinge part.
Fig. 23 is a cross-sectional perspective view illustrating the configuration in which the engaging recess and spring member, which constitute the temporary fixing mechanism illustrated in Fig. 19, are disposed on the handle member side via the hinge part, viewed from a different angle than Fig. 22.
Fig. 24 is a perspective view illustrating the handle member of a capped container according to Embodiment 5 of the present invention positioned on the other side in the rotational direction.
Fig. 25 is a perspective view illustrating the handle member of the capped container illustrated in Fig. 24 positioned on one side in the rotational direction.
Fig. 26 is a rear view illustrating the handle member of the capped container illustrated in Fig. 24 positioned upward relative to the hinge part.
Fig. 27 is a perspective view illustrating the handle member of a capped container according to Embodiment 6 of the present invention positioned on the other side in the rotational direction.
Fig. 28 is a perspective view illustrating the handle member of the capped container illustrated in Fig. 27 positioned on one side in the rotational direction.
Fig. 29 is a rear view illustrating the handle member of the capped container illustrated in Fig. 27 positioned upward relative to the hinge part.

### Description of Embodiments

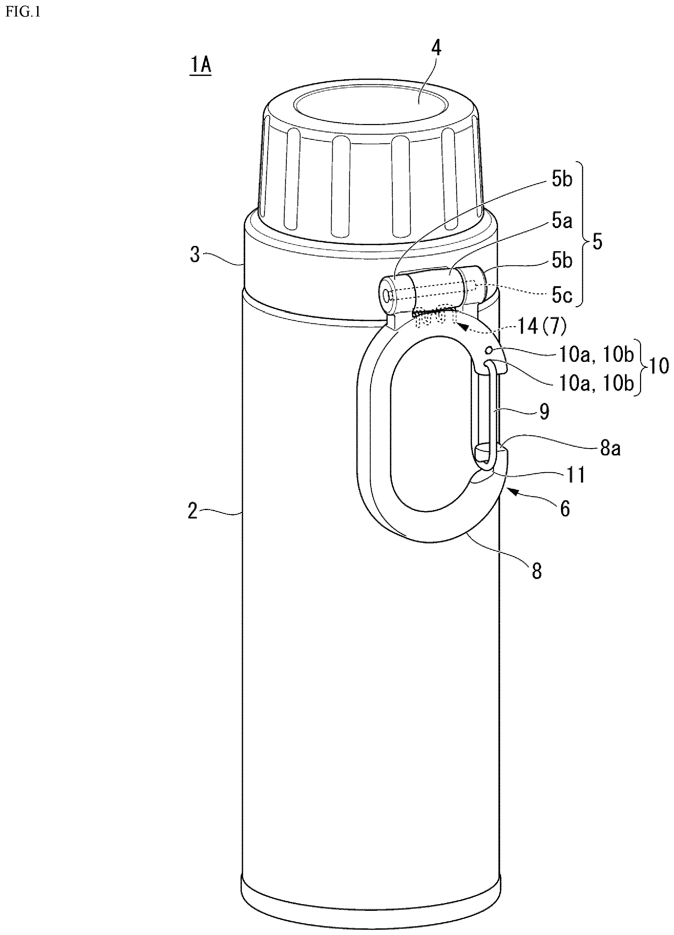

Hereinafter, the embodiments of the present invention will be described in detail with reference to the drawings.
(Embodiment 1) First, as Embodiment 1 of the present invention, the capped container 1A illustrated in Figs. 1 to 8 will be described.

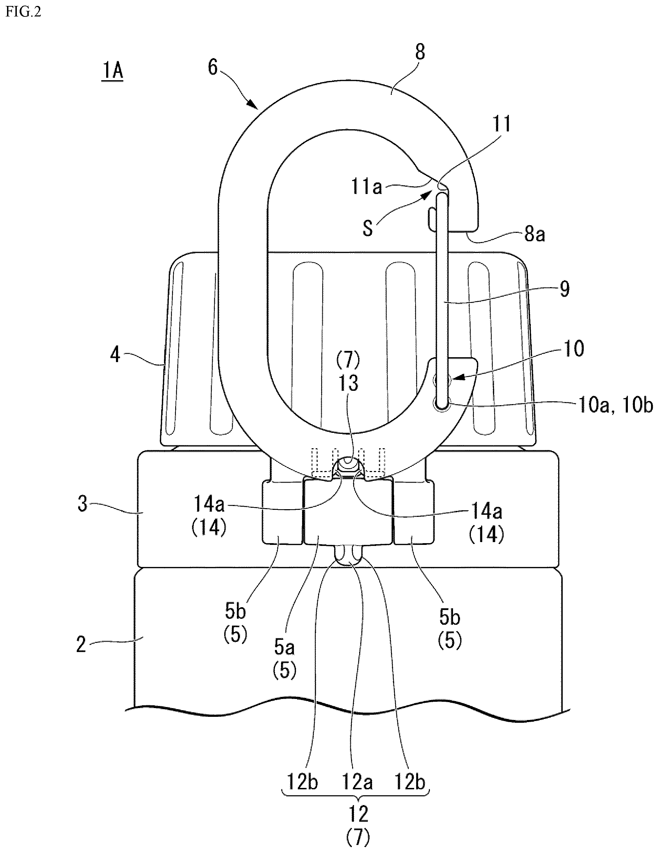

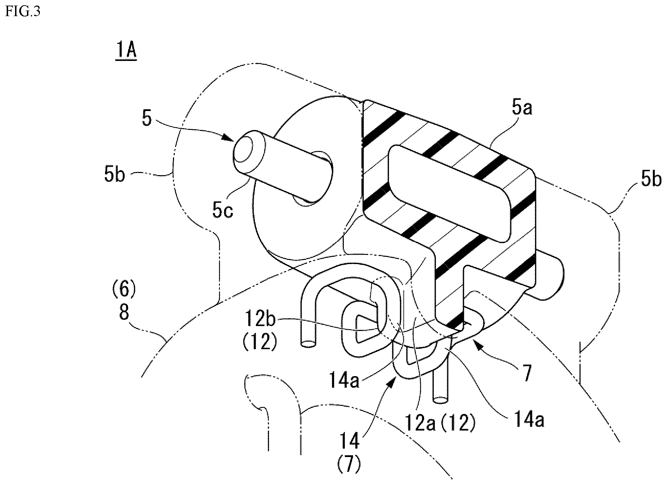

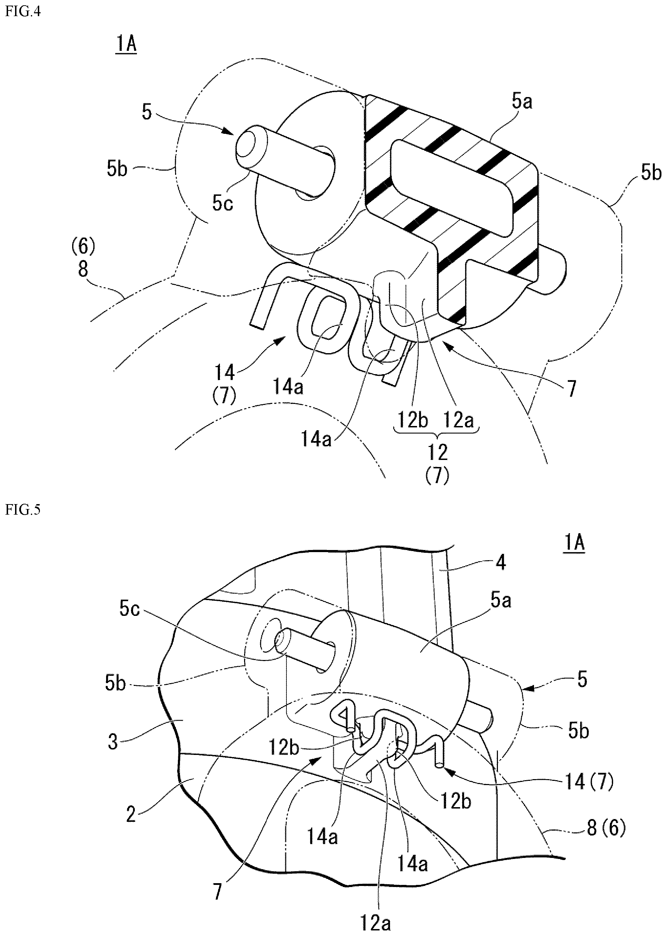

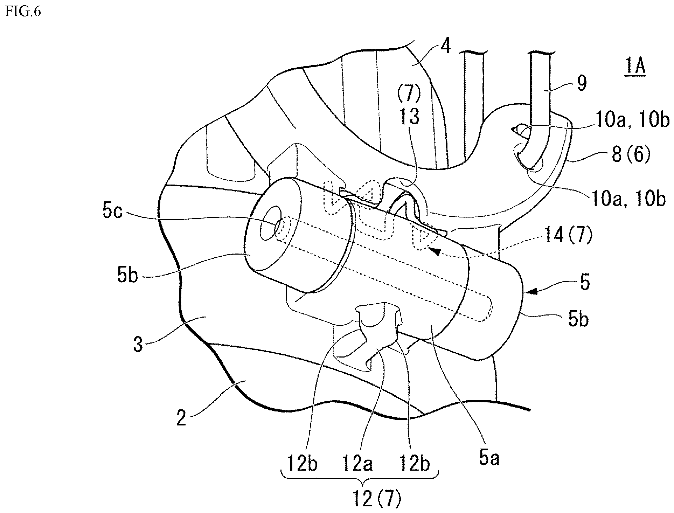

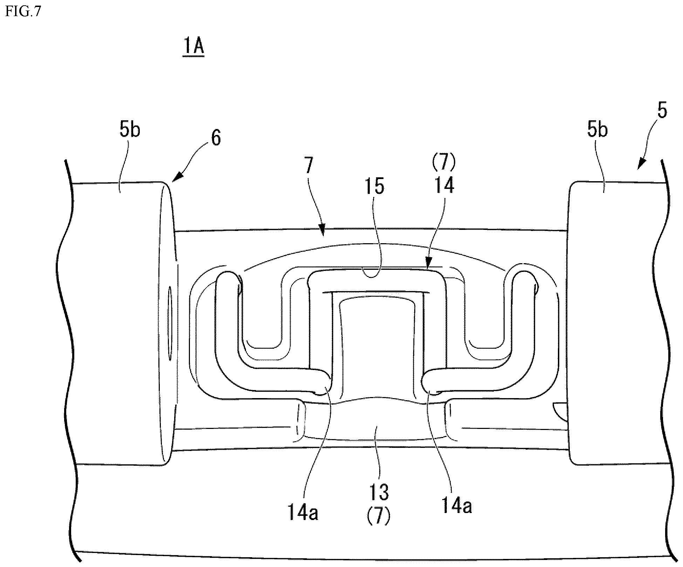

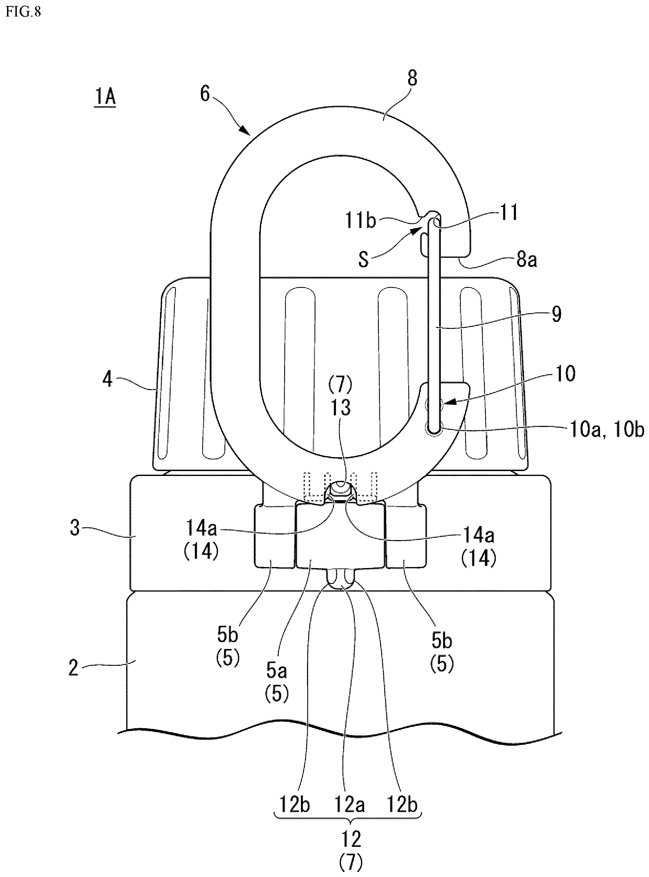

Note that Fig. 1 is a perspective view illustrating the handle member 6 of a capped container 1A positioned on one side in the rotational direction. Fig. 2 is a rear view illustrating the handle member 6 of the capped container 1A positioned on the other side in the rotational direction. Fig. 3 is a transparent perspective view illustrating the handle member 6 temporarily fixed to the shoulder member 3 by the temporary fixing mechanism 7 of the capped container 1A. Fig. 4 is a transparent perspective view illustrating the state before the handle member 6 is temporarily fixed to the shoulder member 3 by the temporary fixing mechanism 7. Fig. 5 is a transparent perspective view illustrating the handle member 6 temporarily fixed to the shoulder member 3 by the temporary fixing mechanism 7, viewed from a different angle than Fig. 3. Fig. 6 is a perspective view illustrating the configuration in which the engaging protrusion 12, which constitutes the temporary fixing mechanism 7, is disposed on the shoulder member 3 side via the hinge part 5. Fig. 7 is a cross-sectional perspective view illustrating the configuration in which the engaging recess 13 and spring member 14, which constitute the temporary fixing mechanism 7, are disposed on the handle member 6 side via the hinge part 5. Fig. 8 is a rear view of a capped container 1A illustrating another configuration of the handle member 6.

As illustrated in Figs. 1 and 2, the capped container 1A of the present embodiment includes a container body 2 with an upper opening and a vacuum insulation structure capable of keeping the beverage (contents) stored in this container body 2 hot or cold.

Specifically, this container body 2 has a bottomed cylindrical outer container and an inner container which are made of, for example, stainless steel, etc. and is configured as a double-structured container in which the inner container is housed inside the outer container, with their mouth edges joined together. Moreover, a vacuum insulation layer is provided between the outer container and the inner container. The vacuum insulation layer can be formed by, for example, sealing the degassing hole provided at the bottom of the outer container in a chamber decompressed (vacuuming) to a high vacuum.

Additionally, the container body 2 has a substantially circular bottom, a substantially cylindrical body portion that stands up from the outer circumference of the bottom, and a substantially cylindrical neck portion that stands up from the upper side of the body portion. Furthermore, the upper end of the neck portion is circularly open as the upper opening of the container body 2.

Although the container body 2 of the present embodiment has an overall substantially cylindrical appearance, the exterior shape of the container body 2 is not particularly limited, so appropriate changes can be made according to the size and design, etc. The outer peripheral surface of the container body 2 may also be painted, printed, etc.

The capped container 1A of the present embodiment includes a shoulder member 3 attached to the outer peripheral part (neck portion) of the upper side of the container body 2 and a cap unit 4 that can be detachably attached to the container body 2 or the shoulder member 3 (in the present embodiment, the container body 2).

The shoulder member 3 is made of, for example, heat-resistant resin and is formed in an overall substantially cylindrical shape. The shoulder member 3 is fitted around the entire circumference of the neck portion of the container body 2 so as to be substantially flush with the outer peripheral surface of the body portion of the container body 2.

The cap unit 4 constitutes a lid that opens and closes the upper opening of the container body 2 and is detachably attached to the container body 2 by screwing. Specifically, this cap unit 4 has a cap body that closes the upper opening of the container body 2 and an inner stopper that is fitted into the container body 2 from the upper opening of the container body 2, wherein the cap body or the inner stopper (in the present embodiment, the inner stopper) is attached to the container body 2 by screwing.

In the capped container 1A of the present embodiment, the abovementioned cap unit 4 is detachably attached to the container body 2 by screwing. In contrast, a male screw part can be provided on the shoulder member 3 on the container body 2 side, while a female screw part can be provided on the cap body on the cap unit 4 side, so that the cap unit 4 can be detachably attached to the shoulder member 3 by screwing. In this configuration, positioning by screwing the male screw part of the shoulder member 3 and the female screw part of the cap body becomes possible.

The capped container 1A of the present embodiment includes a handle member 6 that is rotatably attached to the side of the shoulder member 3 via a hinge part 5 and a temporary fixing mechanism 7 that temporarily fixes (secures) the handle member 6 to the shoulder member 3 in a position with the handle member 6 rotated to one side in the rotational direction (downward in the present embodiment).

In the following description, the side on which the handle member 6 is attached to the shoulder member 3 via the hinge part 5 is referred to as the "rear side (back side)" of the capped container 1A, while the opposite side is referred to as the "front side (front side)" of the capped container 1A.

Additionally, the side on which the cap unit 4 is located relative to the container body 2 is referred to as the "upper side," the direction in which the container body 2 is located relative to the cap unit 4 is referred to as the "lower side," and the direction connecting them is referred to as the "vertical direction." Furthermore, the direction orthogonal to the vertical direction is referred to as the "radial direction," while the direction orthogonal to the front-back direction in the radial direction is referred to as the "left-right direction." When viewing the capped container 1A from the rear side, the right direction is the right side, while the left direction is the left side, and in the rear view of Fig. 2, the right direction is the right side, while the left direction is the left side.

The hinge part 5 includes an inner hinge bearing part 5a provided on the shoulder member 3 side, a pair of outer hinge bearing parts 5b provided on the handle member 6 side, and a hinge shaft 5c that is supported in a shaft hole penetrating these hinge bearing parts 5a, 5b in the rotational axis direction (left-right direction) with the inner hinge bearing part 5a positioned between the pair of outer hinge bearing parts 5b.

The handle member 6 is an inward-opening type carabiner handle that has a ring-shaped body 8 with a partially opened opening 8a and a gate 9 that opens and closes the opening 8a. The handle member 6 is configured so as to have the base end of the gate 9 attached to one end side of the body 8 across the opening 8a via an opening/closing base end 10, with the tip side of the gate 9 swingably opening and closing.

As illustrated in Fig. 2, the handle member 6 has an overall substantially oval ring shape. Additionally, the handle member 6 has the opening 8a (gate 9) on one side in the left-right direction (right side in the present embodiment) of the body 8. Furthermore, the handle member 6 has a pair of outer hinge bearing parts 5b on the base end side of the body 8 and is rotatably attached to the shoulder member 3 in the vertical direction.

That is, in the capped container 1A of the present embodiment, the handle member 6 can rotate within a predetermined angular range (approximately 180° in the present embodiment) between the position as illustrated in Fig. 1 in which the handle member 6 rotated to one side in the rotational direction (downward) is downward relative to the hinge part 5 (hereinafter, referred to as the "first position") and the position as illustrated in Fig. 2 in which the handle member 6 rotated to the other side in the rotational direction (upward) is upward relative to the hinge part 5 (hereinafter, referred to as the "second position").

The body 8 is made of synthetic resin such as polyacetal and has a ring shape with one side in the left-right direction separated by the opening 8a, while the base end side of the rotation (shoulder member 3 side) is integrally formed with a pair of outer hinge bearing parts 5b. Moreover, a concave notch part 11 is provided on the other end side of the body 8 across the opening 8a. The notch part 11 is formed by a cutout part that cuts the inner peripheral surface of the other end side of the body 8 across the opening 8a.

The gate 9 is made of metal wiring such as stainless steel. The gate 9 has a pair of support shafts 10a that are bent inward each other from both ends of an oval loop-shaped wire. The opening/closing base end 10 includes: the pair of support shafts 10a; and a pair of shaft holes 10b provided on one end side of the body 8 across the opening 8a, with the pair of support shafts 10a being pivotally supported in the pair of shaft holes 10b.

The pair of shaft holes 10b are disposed so as to be offset in the oval direction of the gate 9 on one end side of the body 8 across the opening 8a. Correspondingly, the pair of support shafts 10a are also disposed so as to be offset in the oval direction of the gate 9 of the wire. Thus, the gate 9 is swingably attached to one end side of the body 8 across the opening 8a via the opening/closing base end 10 in a state biased in one side in the swing direction (the direction that closes the opening 8a) using the bending deformation (elastic deformation) occurring in the wire. The gate 9 can be swung in the other side in the swing direction (the direction that opens the opening 8a) against the biasing force.

Note that in the present embodiment, the handle member 6 is an inward-opening type carabiner handle, so the gate 9 is swung toward the inside of the body 8. In the present embodiment of the handle member 6, one end side of the body 8 across the opening 8a is located on the base end side (hinge part 5 side) of the body 8, while the other end side across the opening 8a of the body 8 is located on the tip end side (opposite the hinge part 5) of the body 8.

In the handle member 6, the tip end side of the gate 9 engages the notch part 11 with the gate 9 biased on one side in the rotational direction, such that the gate 9 closes the opening 8a. In contrast, in the handle member 6, by swinging the gate 9 in the other side in the rotational direction against the biasing force, the engagement with the notch part 11 is released and the gate 9 opens the opening 8a.

The temporary fixing mechanism 7, as illustrated in Figs. 3 to 7, has an engaging protrusion 12 provided on either the shoulder member 3 or the handle member 6 (shoulder member 3 in the present embodiment) side via the hinge part 5, an engaging recess 13 provided on the other (handle member 6 in the present embodiment) side of the shoulder member 3 or the handle member 6 via the hinge part 5, and a spring member 14 provided inside the engaging recess 13.

The engaging protrusion 12 is located at the lower central part of the inner hinge bearing part 5a, with a protrusion 12a projecting radially outward from below the inner hinge bearing part 5a and from the side of the shoulder member 3, along with a pair of claws 12b protruding from both sides in the width direction (left-right direction) of the protrusion 12a. The engaging recess 13 is formed by a cutout part that cuts the end of the body 8 (handle member 6) located between the pair of outer hinge bearing parts 5b in the thickness direction of the body 8 from the surface side facing the engaging protrusion 12.

The thickness of the body 8 (handle member 6) is greater than the height (radial length) of the protrusion 12a (engaging protrusion 12). Therefore, the engaging recess 13 is provided open only on the surface side of the body 8 facing the engaging protrusion 12 without penetrating the body 8 (handle member 6) in the thickness direction.

The spring member 14 is an elastic member made of metal wiring such as stainless steel. Moreover, the spring member 14 has a pair of elastic displacement parts 14a that clamp the engaging protrusion 12 from the left-right direction, wherein the pair of elastic displacement parts 14a are formed by symmetrically bending a single wire at multiple locations. The spring member 14 is disposed inside the housing recess 15, including the engaging recess 13. The housing recess 15 is formed by a groove that cuts the end of the body 8 (handle member 6) located between the pair of outer hinge bearing parts 5b in the width direction of the body 8 from the surface side facing the inner hinge bearing part 5a. Furthermore, the inside of the housing recess 15 is cut out so as to correspond to the shape of the spring member 14.

The width of the body 8 (handle member 6) is larger than that of the spring member 14. Therefore, the housing recess 15 is provided open only on the surface side of the body 8 facing the inner hinge bearing part 5a without penetrating the body 8 (handle member 6) in the width direction. The spring member 14 is housed inside the housing recess 15 and is maintained in the state of being housed inside this housing recess 15 facing the inner hinge bearing part 5a.

With the temporary fixing mechanism 7, when the handle member 6 is rotated to the first position, the spring member 14 elastically deforms, causing the engaging protrusion 12 to spread the pair of elastic displacement parts 14a in the left-right direction, resulting in the engaging protrusion 12 being engaged inside the engaging recess 13. At this time, the pair of elastic displacement parts 14a clamp the protrusion 12a from the left-right direction, while the pair of claws 12b engage with the pair of elastic displacement parts 14a.

As a result, as illustrated in Figs. 1, 3, and 5, the temporary fixing mechanism 7, which is the abovementioned fixing structure, allows the handle member 6 to be temporarily fixed to the shoulder member 3 in the first position along the side of the container body 2. With the temporary fixing mechanism 7, when the pair of claws 12b slide over the pair of elastic displacement parts 14a, the pair of claws 12b engage with the pair of elastic displacement parts 14a, allowing to provide a clicking sensation.

The housing recess 15 may be made slightly larger than the spring member 14, so that when the spring member 14 is housed inside the housing recess 15, the spring member 14 can move slightly inside the housing recess 15. As a result, the spring member 14 moves in response to the pair of elastic displacement parts 14a following the protrusion 12a, absorbing the impact of positional deviations due to dimensional variations between the shoulder member 3 and the handle member 6 and ensuring the stable engagement of the engaging protrusion 12 inside the engaging recess 13.

In contrast, the handle member 6 is rotated to the other side (upper side) in the rotational direction from the state in which the handle member 6 is temporarily fixed to the shoulder member 3, by the abovementioned temporary fixing mechanism 7. At this time, as the spring member 14 elastically deforms, the engaging protrusion 12 spreads the pair of elastic displacement parts 14a in the left-right direction, while the pair of claws 12b slide over the pair of elastic displacement parts 14a, as illustrated in Fig. 4, releasing the engagement of the engaging protrusion 12 with the engaging recess 13. As a result, as illustrated in Fig. 2, the handle member 6 can be freely rotated to the second position.

With the capped container 1A of the present embodiment having the above configuration, the capped container 1A can be carried in a hanging state by hooking the abovementioned handle member 6 to a belt loop of a pair of trousers, etc. Moreover, with the capped container 1A of the present embodiment, it is possible to carry the container while holding the handle member 6.

In the capped container 1A of the present embodiment, the handle member 6 can be temporarily fixed to the shoulder member 3 in the first position along the side of the container body 2 by the temporary fixing mechanism 7, which is a fixing structure. This improves the storability of the capped container 1A in bags etc., making it possible to carry it compactly.

Furthermore, in the capped container 1A of the present embodiment, the spring member 14, which is an elastic member, is made of metal wiring such as stainless steel, so it experiences little deterioration or deformation with repeated use. Therefore, the feel of temporarily fixing the handle member 6 by the temporary fixing mechanism 7 is less likely to change, allowing it to withstand long-term use without damage.

Moreover, since the spring member 14, which is an elastic member, is made of metal wiring such as stainless steel, bending the wire can ensure sufficient bending length while keeping it compact, making it possible to keep the structure around the hinge part 5 compact.

Furthermore, since the spring member 14 can ensure sufficient bending length in a space-saving manner, it is possible to reduce friction when sliding with the engaging protrusion 12, in addition to suppressing the wear of resin parts. Additionally, sliding over the engaging protrusion 12 is also smooth, providing a good feel.

Since the spring member 14, which is an elastic member, is made of metal wiring such as stainless steel, it is less likely to undergo plastic deformation compared to providing a so-called resin spring member that utilizes resin bending on the handle member 6 or hinge part 5. Therefore, it is possible to prevent the plastic deformation of the members due to impacts such as drops, in addition to preventing the handle member 6 or hinge part 5 from being damaged compared to providing a resin spring member.

Moreover, since the spring member 14 is made of metal wiring, the part cost of the spring member 14 is also low and the assemblability is good. Furthermore, by housing the spring member 14 inside the housing recess 15, there are fewer parts visible from the outside, giving it a simple appearance and good aesthetics.

Further, in the capped container 1A of the present embodiment, the handle member 6 is temporarily fixed to the shoulder member 3 in the first position by the abovementioned temporary fixing mechanism 7, preventing the handle member 6 from unintentionally rotating when drinking the beverage in the container body 2 and not getting in the way. As a result, it is possible to further improve usability.

Incidentally, in the capped container 1A of the present embodiment, as illustrated in Fig. 2, a gap S is provided between the tip end of the gate 9 and the position facing the notch part 11 when the tip end side of the gate 9 is engaged with the notch part 11. Moreover, the notch part 11 has an inclined surface 11a inclined in the direction away from the tip end of the gate 9 toward the opening side at the position facing the tip end of the gate 9, with a cutout part cutting the inner peripheral surface.

In this case, for example, when an impact is applied to the tip end side of the handle member 6 due to a drop, etc., the synthetic resin body 8 flexes, eliminating the gap S, causing the tip end of the gate 9 to contact the notch part 11. At this time, the tip end of the gate 9 contacts the inclined surface 11a obliquely, avoiding a frontal collision between the tip end of the gate 9 and the notch part 11. As a result, with the capped container 1A of the present embodiment, it is possible to prevent the handle member 6 from being damaged by the load applied to the handle member 6 upon releasing the engagement of the gate 9 with the notch part 11 along the inclined surface 11a, thereby dissipating the impact of a drop obliquely along the inclined surface 11a.

In particular, even when the body 8 of the handle member 6 is made of synthetic resin, it is possible to achieve a structure that prevents the handle member 6 from being damaged while reducing the weight and cost of the handle member 6 and mitigating the load applied to the handle member 6.

Regarding the handle member 6, as illustrated in the notch part 11 in Fig. 8, it may be configured so as to include a hook part 11b that locks the tip end side (wire) of the gate 9 instead of the inclined surface 11a described above. The hook part 11b is provided protruding from the open end on the side facing the tip end of the gate 9 of the notch part 11 in the direction that narrows the opening width of the notch part 11.

In this case, for example, when an impact is applied to the tip end side of the handle member 6 due to a drop, etc., the synthetic resin body 8 flexes slightly by the amount of the gap S, causing the tip end of the gate 9 to contact the notch part 11. At this time, the tip end side (wire) of the gate 9 is locked by the hook part 11b, maintaining the engagement of the gate 9 with the notch part 11 and allowing to prevent the progress of the flexural deformation of the body 8. In other words, it is possible to prevent the flexural deformation of the body 8 by having the gate 9 resist like a prop when the opening 8a side (right side in Fig. 8) of the body 8 flexes in the direction of collapsing.

Thus, in the capped container 1A of the present embodiment, it is possible to prevent the handle member 6 from being damaged by the load applied to the handle member 6.

Moreover, with the handle member 6, whether to provide the inclined surface 11a on the body 8 as illustrated in Fig. 2 or to provide the hook part 11b as illustrated in Fig. 8 depends on the shape such as material and thickness of the body 8, along with the overall weight of the capped container 1A when the container body 2 is filled with contents, etc., so the optimal shape that can prevent the handle member 6 from being damaged should be selected.

Note that the abovementioned effects of the capped container 1A of the present embodiment also apply to the capped containers 1B to 1F, which will be described later, as they have corresponding similar structures.

### (Embodiment 2)

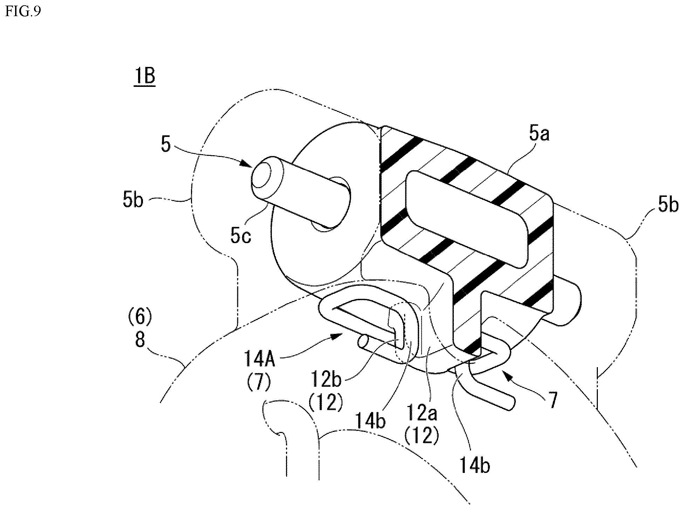

Next, as Embodiment 2 of the present invention, the capped container 1B illustrated in Figs. 9 to 13 will be described.

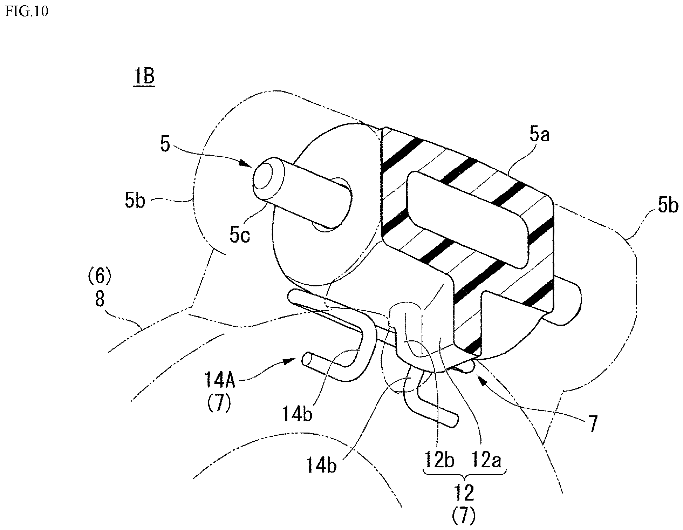

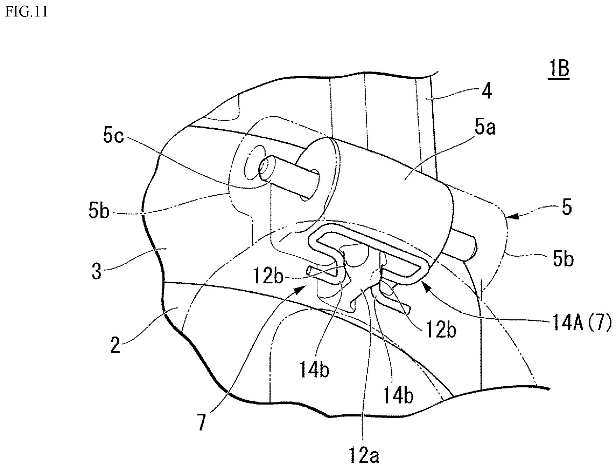

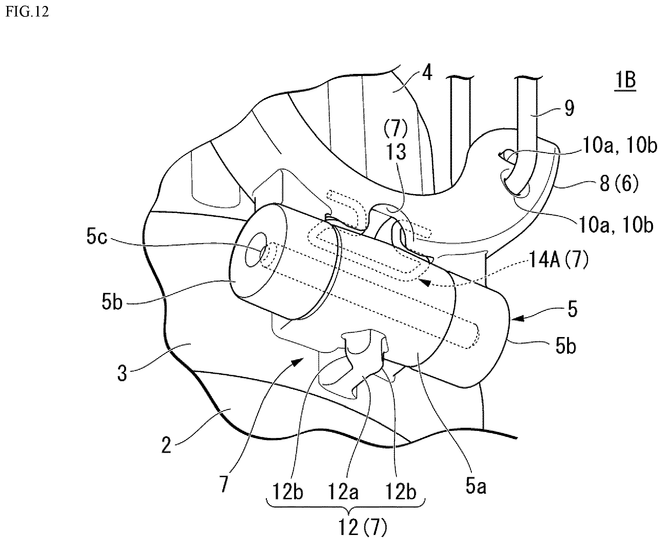

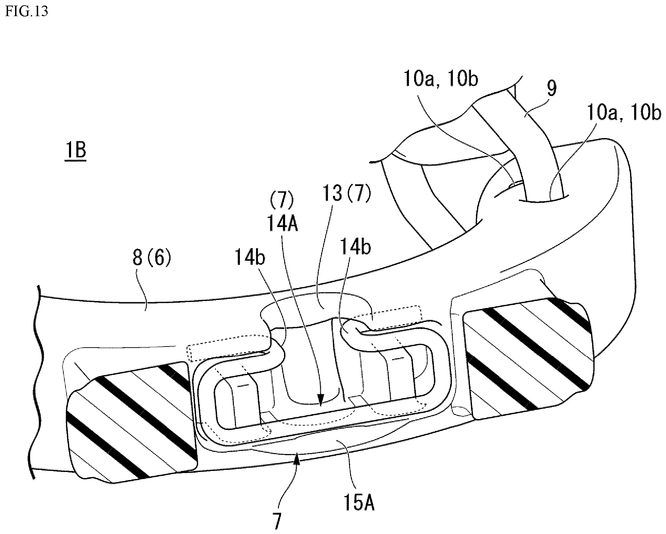

Note that Fig. 9 is a transparent perspective view illustrating the handle member 6 temporarily fixed to the shoulder member 3 by the temporary fixing mechanism 7 of a capped container 1B. Fig. 10 is a transparent perspective view illustrating the state before the handle member 6 is temporarily fixed to the shoulder member 3 by the temporary fixing mechanism 7. Fig. 11 is a transparent perspective view illustrating the handle member 6 temporarily fixed to the shoulder member 3 by the temporary fixing mechanism 7, viewed from a different angle than Fig. 9. Fig. 12 is a perspective view illustrating the configuration in which the engaging protrusion 12, which constitutes the temporary fixing mechanism 7, is disposed on the shoulder member 3 side via the hinge part 5. Fig. 13 is a cross-sectional perspective view illustrating the configuration in which the engaging recess 13 and spring member 14A, which constitute the temporary fixing mechanism 7, are disposed on the handle member 6 side via the hinge part 5. In the following description, parts equivalent to those of the capped container 1A will be omitted, with the same reference numerals used in the drawings.

The capped container 1B of the present embodiment has basically the same configuration as the capped container 1A, except for changing the configuration of the abovementioned temporary fixing mechanism 7 and the housing recess 15 in the configuration of the capped container 1A. Specifically, the temporary fixing mechanism 7 of the present embodiment has a spring member 14A with a shape different from the abovementioned spring member 14, as illustrated in Figs. 9 to 13. Moreover, to house this spring member 14A, it has a housing recess 15A with a shape different from the housing recess 15.

The spring member 14A has a pair of elastic displacement parts 14b that clamp the engaging protrusion 12 from the left-right direction, wherein the pair of elastic displacement parts 14b are formed by symmetrically bending a single wire at multiple locations. The spring member 14A has a configuration with fewer bends in a single wire compared to the abovementioned spring member 14. Except for being formed by a groove corresponding to the shape of the spring member 14A, the housing recess 15A has basically the same arrangement and configuration as the housing recess 15.

With the temporary fixing mechanism 7 of the present embodiment, when the handle member 6 is rotated to the first position, the spring member 14A elastically deforms, causing the engaging protrusion 12 to spread the pair of elastic displacement parts 14b in the left-right direction, resulting in the engaging protrusion 12 being engaged inside the engaging recess 13. At this time, the pair of elastic displacement parts 14b clamp the protrusion 12a from the left-right direction, while the pair of claws 12b engage with the pair of elastic displacement parts 14b.

As a result, as illustrated in Figs. 9 and 11, the temporary fixing mechanism 7 allows the handle member 6 to be temporarily fixed to the shoulder member 3 in the first position along the side of the container body 2. With the temporary fixing mechanism 7 of the present embodiment, when the pair of claws 12b slide over the pair of elastic displacement parts 14b, the pair of claws 12b engage with the pair of elastic displacement parts 14b, allowing to provide a clicking sensation.

In contrast, the handle member 6 is rotated to the other side (upper side) in the rotational direction from the state in which the handle member 6 is temporarily fixed to the shoulder member 3, by the abovementioned temporary fixing mechanism 7. At this time, as the spring member 14A elastically deforms, the engaging protrusion 12 spreads the pair of elastic displacement parts 14b in the left-right direction and the pair of claws 12b slide over the pair of elastic displacement parts 14b, as illustrated in Fig. 10, releasing the engagement of the engaging protrusion 12 with the engaging recess 13. As a result, the handle member 6 can be freely rotated to the second position.

In the capped container 1B of the present embodiment, the handle member 6 is temporarily fixed to the shoulder member 3 in the first position by the abovementioned temporary fixing mechanism 7, preventing the handle member 6 from unintentionally rotating when drinking the beverage in the container body 2 and not getting in the way. As a result, it is possible to further improve usability.

### (Embodiment 3)

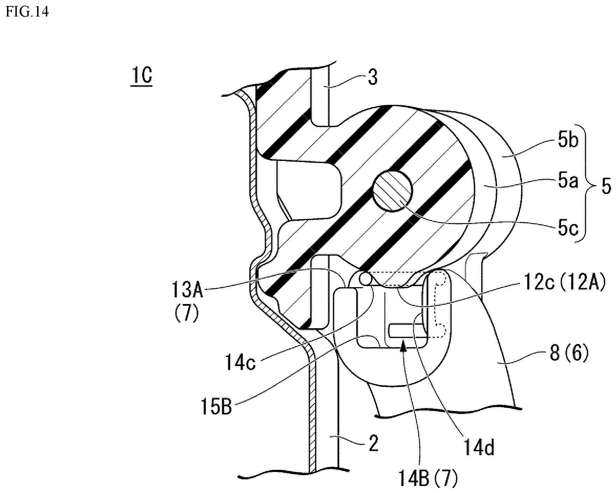

Next, as Embodiment 3 of the present invention, the capped container 1C illustrated in Figs. 14 to 18 will be described.

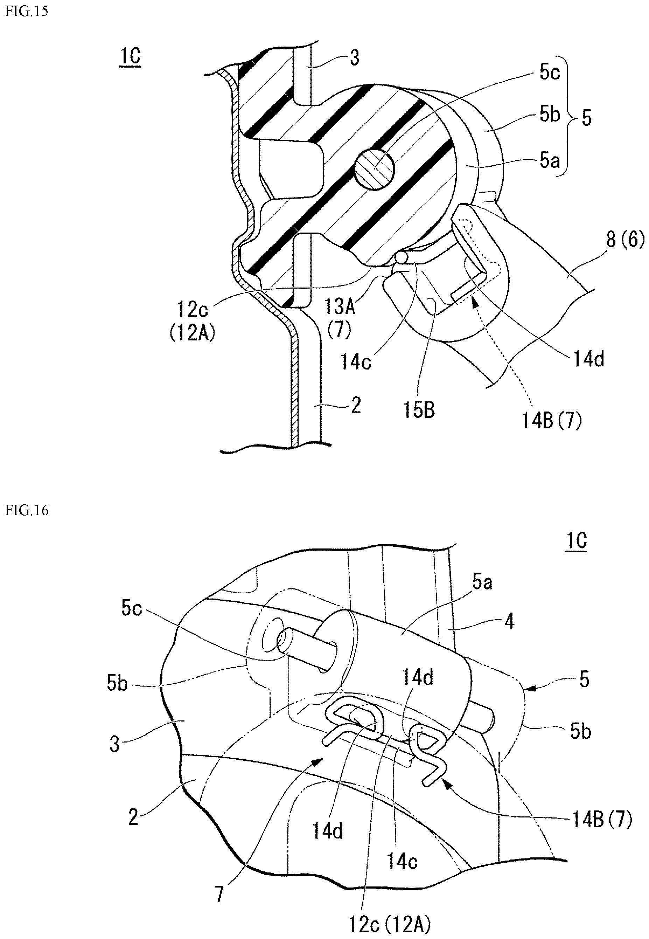

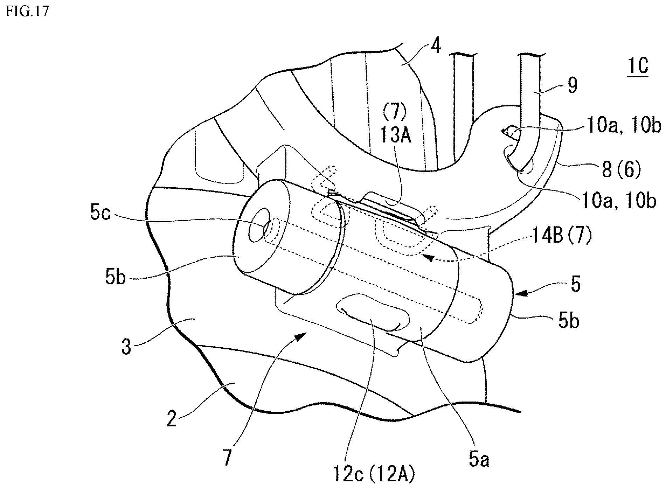

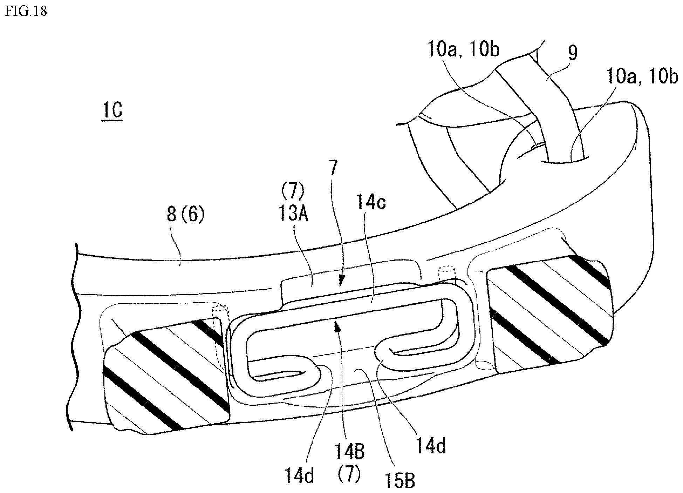

Note that Fig. 14 is a cross-sectional perspective view illustrating the handle member 6 temporarily fixed to the shoulder member 3 by the temporary fixing mechanism 7 of a capped container 1C. Fig. 15 is a cross-sectional perspective view illustrating the state before the handle member 6 is temporarily fixed to the shoulder member 3 by the temporary fixing mechanism 7. Fig. 16 is a transparent perspective view illustrating the handle member 6 temporarily fixed to the shoulder member 3 by the temporary fixing mechanism 7, viewed from a different angle than Fig. 14. Fig. 17 is a perspective view illustrating the configuration in which the engaging protrusion 12A, which constitutes the temporary fixing mechanism 7, is disposed on the shoulder member 3 side via the hinge part 5. Fig. 18 is a cross-sectional perspective view illustrating the configuration in which the engaging recess 13A and spring member 14A, which constitute the temporary fixing mechanism 7, are disposed on the handle member 6 side via the hinge part 5. In the following description, parts equivalent to those of the capped container 1A will be omitted, with the same reference numerals used in the drawings.

The capped container 1C of the present embodiment has basically the same configuration as the capped container 1A, except for changing the configuration of the abovementioned temporary fixing mechanism 7 and the housing recess 15 in the configuration of the capped container 1A. Specifically, the temporary fixing mechanism 7 of the present embodiment has an engaging protrusion 12A with a shape different from the abovementioned engaging protrusion 12, an engaging recess 13A with a shape different from the abovementioned engaging recess 13, and a spring member 14B with a shape different from the abovementioned spring member 14, as illustrated in Figs. 14 to 18. Moreover, to house this spring member 14B, it has a housing recess 15B with a shape different from the housing recess 15.

The engaging protrusion 12A is located at the lower central part of the inner hinge bearing part 5a and has a protrusion 12c projecting downward. The protrusion 12c has a shape longer in the width direction (left-right direction) than the protrusion 12a. The engaging recess 13A has basically the same arrangement and configuration as the abovementioned engaging recess 13, except that it is formed by a cutout part with a long shape in the width direction (left-right direction) to match the shape of this protrusion 12c.

The spring member 14B has a pair of elastic displacement parts 14c and 14d that clamp the engaging protrusion 12A from the front-rear direction and is formed by symmetrically bending a single wire at multiple locations to form the pair of elastic displacement parts 14c and 14d. Among the pair of elastic displacement parts 14c and 14d, one elastic displacement part 14c is formed by the central part of the spring member 14B, which extends linearly in the width direction (left-right direction) facing the front side of the engaging protrusion 12A. The other elastic displacement part 14d is formed by a pair of portions symmetrically bent on both the left and right sides of the spring member 14B, facing the rear side of the engaging protrusion 12A.

Except for being formed by a groove corresponding to the shape of the spring member 14B, the housing recess 15B has basically the same arrangement and configuration as the housing recess 15.

With the temporary fixing mechanism 7 of the present embodiment, when the handle member 6 is rotated to the first position, the spring member 14B elastically deforms, causing one of the pair of elastic displacement parts 14c and 14d, specifically the elastic displacement part 14c, to slide over the protrusion 12c in the front-rear direction, resulting in the engaging protrusion 12A being engaged inside the engaging recess 13. At this time, the pair of elastic displacement parts 14c and 14d clamp the protrusion 12c from the front-rear direction, so the protrusion 12c is engaged with the pair of elastic displacement parts 14c and 14d.

As a result, as illustrated in Figs. 14 and 16, the temporary fixing mechanism 7 allows the handle member 6 to be temporarily fixed to the shoulder member 3 in the first position along the side of the container body 2. Moreover, with the temporary fixing mechanism 7, it is possible to provide a clicking sensation when one of the elastic displacement parts 14c slides over the protrusion 12c.

In contrast, the handle member 6 is rotated to the other side (upper side) in the rotational direction from the state in which the handle member 6 is temporarily fixed to the shoulder member 3, by the abovementioned temporary fixing mechanism 7. At this time, as the spring member 14B elastically deforms, one of the pair of elastic displacement parts 14c and 14d, specifically the elastic displacement part 14c, slides over the protrusion 12c, releasing the engagement of the engaging protrusion 12A with the engaging recess 13A, as illustrated in Fig. 15. As a result, the handle member 6 can be freely rotated to the second position.

In the capped container 1C of the present embodiment, the handle member 6 is temporarily fixed to the shoulder member 3 in the first position by the abovementioned temporary fixing mechanism 7, preventing the handle member 6 from unintentionally rotating when drinking the beverage in the container body 2 and not getting in the way. As a result, it is possible to further improve usability.

### (Embodiment 4)

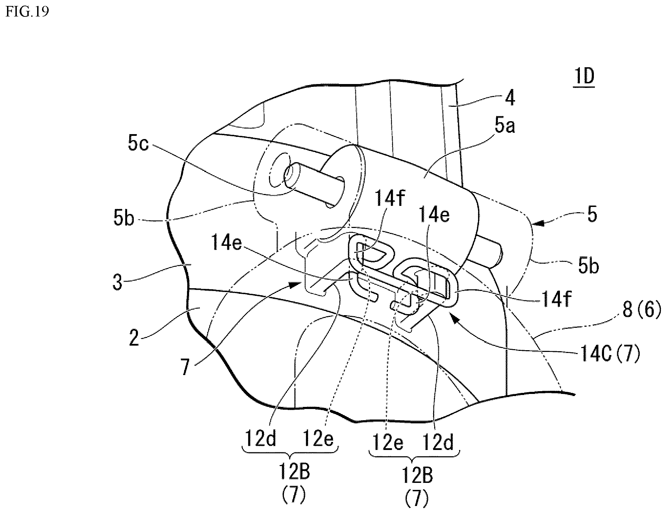

Next, as Embodiment 4 of the present invention, the capped container 1D illustrated in Figs. 19 to 23 will be described.

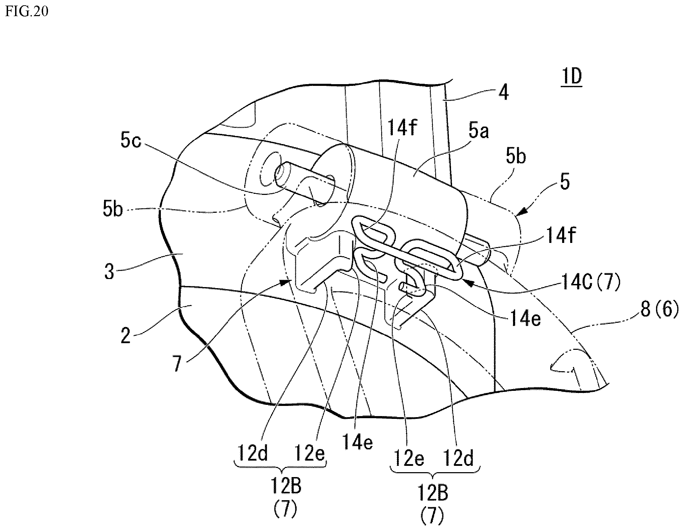

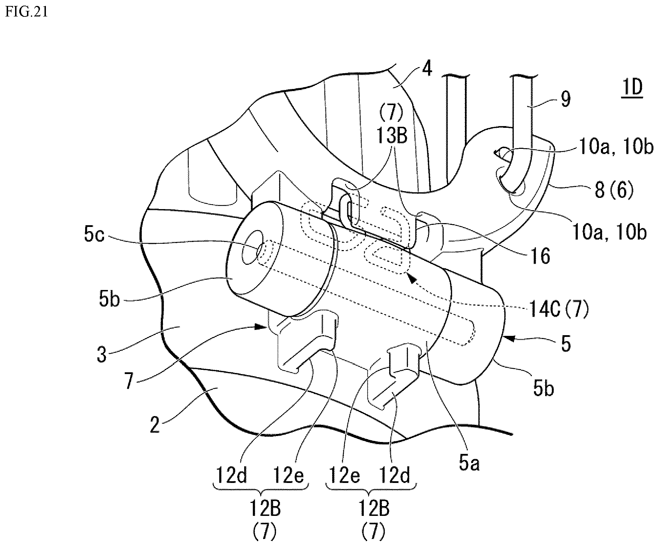

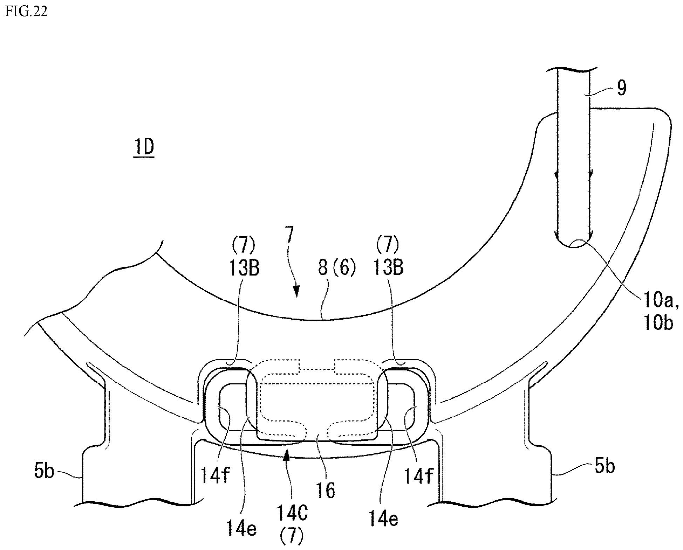

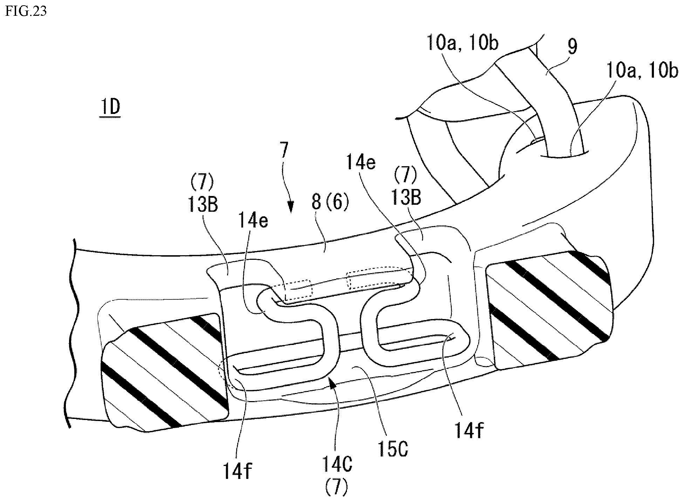

Note that Fig. 19 is a transparent perspective view illustrating the handle member 6 temporarily fixed to the shoulder member 3 by the temporary fixing mechanism 7 of a capped container 1D. Fig. 20 is a transparent perspective view illustrating the state before the handle member 6 is temporarily fixed to the shoulder member 3 by the temporary fixing mechanism 7. Fig. 21 is a perspective view illustrating the configuration in which the engaging protrusion 12B, which constitutes the temporary fixing mechanism 7, is disposed on the shoulder member 3 side via the hinge part 5. Fig. 22 is a perspective view illustrating the configuration in which the engaging recess 13B and spring member 14C, which constitute the temporary fixing mechanism 7, are disposed on the handle member 6 side via the hinge part 5. Fig. 23 is a cross-sectional perspective view illustrating the configuration in which the engaging recess 13B and spring member 14C, which constitute the temporary fixing mechanism 7, are disposed on the handle member 6 side via the hinge part 5, viewed from a different angle than Fig. 22. In the following description, parts equivalent to those of the capped container 1A will be omitted, with the same reference numerals used in the drawings.

The capped container 1D of the present embodiment has basically the same configuration as the capped container 1A, except for changing the configuration of the abovementioned temporary fixing mechanism 7 and the housing recess 15 in the configuration of the capped container 1A. Specifically, the temporary fixing mechanism 7 of the present embodiment has an engaging protrusion 12B with a shape different from the abovementioned engaging protrusion 12, an engaging recess 13B with a shape different from the abovementioned engaging recess 13, and a spring member 14C with a shape different from the abovementioned spring member 14, as illustrated in Figs. 19 to 23. Moreover, in order to house this spring member 14C, it has a housing recess 15C with a shape different from the housing recess 15.

The engaging protrusion 12B is located near the lower left and right ends of the inner hinge bearing part 5a, with a pair of protrusions 12d projecting radially outward each other in parallel from below the inner hinge bearing part 5a and from the side of the shoulder member 3, along with a pair of claws 12e projecting inward each other in the left-right direction from the tips of the pair of protrusions 12d. The engaging recess 13B is formed by a pair of cutout parts that cut the end of the body 8 (handle member 6) located between the pair of outer hinge bearing parts 5b in the thickness direction of the body 8 from the surface side facing the engaging protrusion 12B.

The spring member 14C has a pair of elastic displacement parts 14e and 14f that clamp the pair of claws 12e (engaging protrusion 12B) from the front-rear direction and is formed by symmetrically bending a single wire at multiple locations to form the pair of elastic displacement parts 14e and 14f. Among the pair of elastic displacement parts 14e and 14f, one elastic displacement part 14e is formed by a pair of portions symmetrically bent on both the left and right sides of the spring member 14C, facing the front side of the pair of claws 12e. The other elastic displacement part 14f is formed by a pair of portions symmetrically bent on both the left and right sides of the spring member 14C, extending linearly in the width direction (left-right direction), facing the rear side of the pair of claws 12e.

The housing recess 15C has basically the same arrangement and configuration as the abovementioned housing recess 15, except that it is formed by a groove corresponding to the shape of the spring member 14C and includes a cover member 16 between the pair of cutout parts of the engaging recess 13B.

The housing recess 15C is provided with a cover member 16 that is formed in a roof plate shape toward the inner hinge bearing part 5a between the pair of cutout parts of the engaging recess 13B on the side of the body 8 facing the shoulder member 3 when the handle member 6 is in the first position. The cover member 16 is positioned so as to overlap the intermediate part of the elastic displacement part 14e of the spring member 14C formed in a left-right pair and presses the spring member 14C in the thickness direction of the body 8.

This prevents the spring member 14C from falling out of the housing recess 15C and stabilizes the engagement with the pair of claws 12e described later by fixing the position of the elastic displacement part 14e in the front-rear direction in the first position.

Note that in the left-right direction, similarly to the spring member 14, the spring member 14C can move slightly within the housing recess 15C, absorbing the impact of positional deviations due to dimensional variations and ensuring the stable engagement of the engaging protrusion 12B inside the engaging recess 13B.

With the temporary fixing mechanism 7 of the present embodiment, when the handle member 6 is rotated to the first position, the spring member 14C elastically deforms, causing one of the pair of elastic displacement parts 14e and 14f, specifically the elastic displacement part 14e, to slide over the pair of claws 12e in the front-rear direction, resulting in the engaging protrusion 12B being engaged inside the engaging recess 13B. At this time, the pair of elastic displacement parts 14e and 14f clamp the pair of claws 12e from the front-rear direction, so the pair of claws 12e are engaged with the pair of elastic displacement parts 14e and 14f.

As a result, as illustrated in Fig. 19, the temporary fixing mechanism 7 allows the handle member 6 to be temporarily fixed to the shoulder member 3 in the first position along the side of the container body 2. Moreover, with the temporary fixing mechanism 7, it is possible to provide a clicking sensation when one of the elastic displacement parts 14e slides over the pair of claws 12e.

In contrast, the handle member 6 is rotated to the other side (upper side) in the rotational direction from the state in which the handle member 6 is temporarily fixed to the shoulder member 3 by the abovementioned temporary fixing mechanism 7. At this time, as the spring member 14C elastically deforms, one of the pair of elastic displacement parts 14e and 14f, specifically the elastic displacement part 14e, slides over the pair of claws 12e, releasing the engagement of the engaging protrusion 12B with the engaging recess 13B, as illustrated in Fig. 20. As a result, the handle member 6 can be freely rotated to the second position.

In the capped container 1D of the present embodiment, the handle member 6 is temporarily fixed to the shoulder member 3 in the first position by the abovementioned temporary fixing mechanism 7, preventing the handle member 6 from unintentionally rotating when drinking the beverage in the container body 2 and not getting in the way. As a result, it is possible to further improve usability.

### (Embodiment 5)

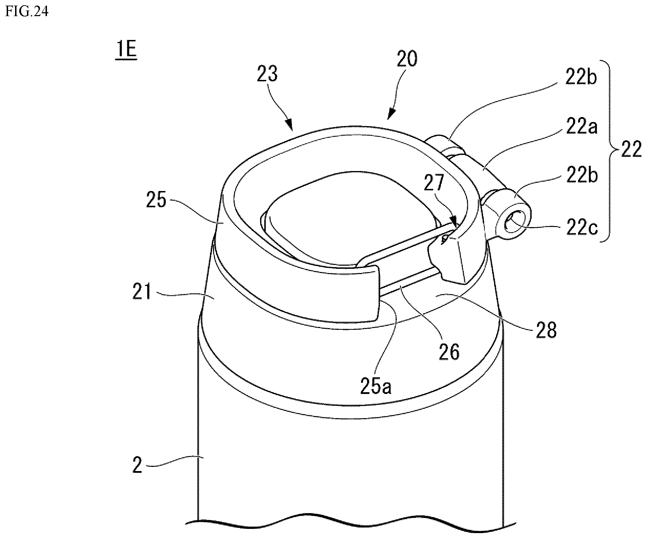

Next, as Embodiment 5 of the present invention, the capped container 1E illustrated in Figs. 24 to 26 will be described.

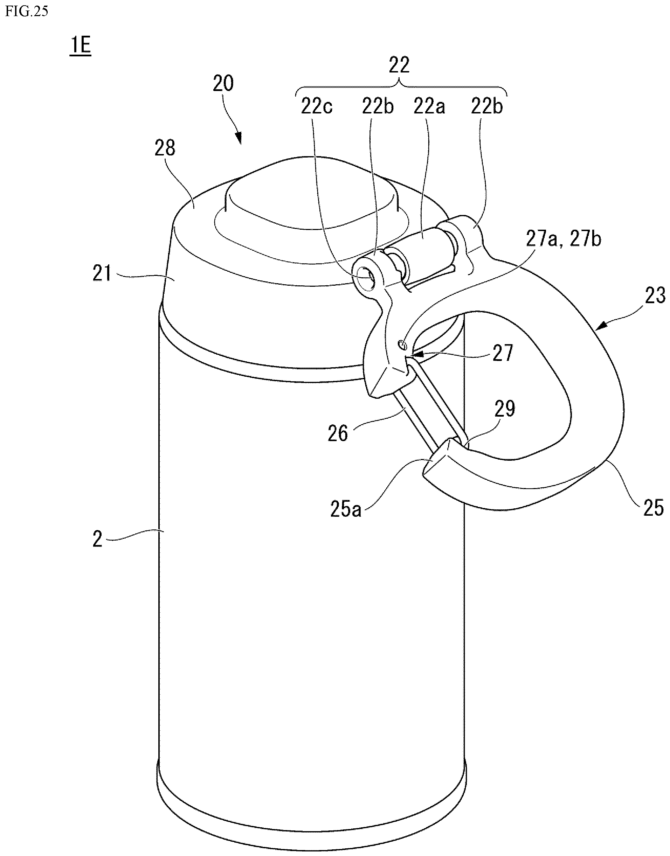

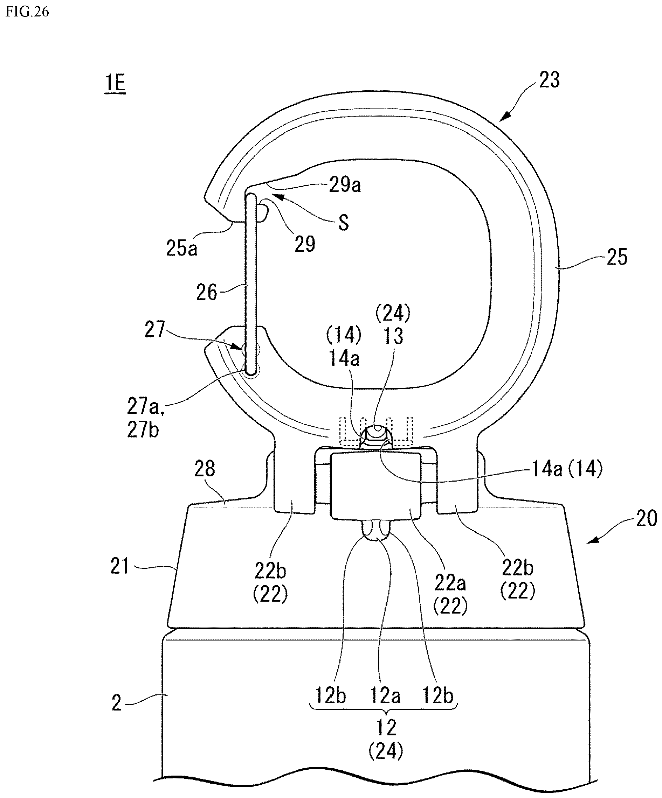

Note that Fig. 24 is a perspective view illustrating the handle member 23 of a capped container 1E positioned on the other side in the rotational direction. Fig. 25 is a perspective view illustrating the handle member 23 of a capped container 1E positioned on one side in the rotational direction. Fig. 26 is a rear view illustrating the handle member 23 of the capped container 1E positioned upward relative to the hinge part 22. In the following description, parts equivalent to those of the capped container 1A will be omitted, with the same reference numerals used in the drawings.

The capped container 1E of the present embodiment, as illustrated in Figs. 24 to 26, includes a cap unit 20 that is detachably attached to the container body 2 with an upper opening.

The cap unit 20 constitutes a lid that opens and closes the upper opening of the container body 2 and is detachably attached to the container body 2 by screwing. Specifically, this cap unit 20 has a cap body 21 that closes the upper opening of the container body 2 and an inner stopper that is fitted into the container body 2 from the upper opening of the container body 2, with the cap body 21 or the inner stopper (in the present embodiment, the inner stopper) attached to the container body 2 by screwing.

The cap unit 20 includes a handle member 23 rotatably attached to the side of the cap body 21 via a hinge part 22 and a temporary fixing mechanism 24 for temporarily fixing the handle member 23 to the cap body 21 in a position with the handle member 23 rotated on one side (rear side in the present embodiment) in the rotational direction.

In the following description, the side on which the handle member 23 is attached to the cap body 21 via the hinge part 22 is referred to as the "rear side (back side)" of the capped container 1E, while the opposite side is referred to as the "front side (front side)" of the capped container 1E.

Additionally, the side on which the cap unit 20 is located relative to the container body 2 is referred to as the "upper side," the direction in which the container body 2 is located relative to the cap unit 20 is referred to as the "lower side," and the direction connecting them is referred to as the "vertical direction." Furthermore, the direction orthogonal to the vertical direction is referred to as the "radial direction," while the direction orthogonal to the front-back direction in the radial direction is referred to as the "left-right direction." When viewing the capped container 1E from the rear side, the right direction is the right side, while the left direction is the left side, and in the rear view of Fig. 26, the right direction is the right side, while the left direction is the left side.

The hinge part 22 includes an inner hinge bearing part 22a provided on the cap body 21 side, a pair of outer hinge bearing parts 22b provided on the handle member 23 side, and a hinge shaft 22c pivotally supported in a shaft hole penetrating the hinge bearing parts 22a and 22b in the rotational axis direction (left-right direction), with the inner hinge bearing part 22a positioned between the pair of outer hinge bearing parts 22b.

The handle member 23 is an inward-opening type carabiner handle and has a ring-shaped body 25 with a partially opened opening 25a, along with a gate 26 that opens and closes the opening 25a. The handle member 23 is configured so as to have the base end of the gate 26 attached to one end side of the body 25 across the opening 25a via an opening/closing base end 27, with the tip side of the gate 26 swingably opening and closing.

The handle member 23 has an overall rounded square ring shape. Moreover, the handle member 23 has the opening 25a (gate 26) on one side in the left-right direction (left side in the present embodiment) of the body 25. Furthermore, the handle member 23 has a pair of outer hinge bearing parts 22b on the base end side of the body 25 and is rotatably attached to the cap body 21 in the front-rear direction.

That is, with the capped container 1E of the present embodiment, the handle member 23 can rotate within a predetermined angle range (approximately 210° in the present embodiment) between the position as illustrated in Fig. 24 in which the handle member 23 rotated to the other side (front side) in the rotational direction overlaps the upper surface of the cap body 21 (hereinafter, referred to as the "second position") and the position as illustrated in Fig. 25 in which the handle member 23 rotated to one side (rear side) in the rotational direction is inclined downward with respect to the hinge part 22 (hereinafter, referred to as the "first position").

In addition, the upper surface of the cap body 21 is provided with a housing recess 28 for housing the handle member 23 in the first position. The housing recess 28 is provided to cut out the perimeter of the upper surface of the cap body 21 so as to match the shape of the handle member 23.

The body 25 is made of heat-resistant resin, for example, and has a ring shape with one side in the left-right direction separated by the opening 25a. The base end side (hinge part 22 side) is integrally molded with a pair of outer hinge bearing parts 22b. Moreover, a concave notch part 29 is provided on the other end side of the body 25 across the opening 25a. The notch part 29 is formed by a cutout part that cuts the inner peripheral surface of the other end side of the body 25 across the opening 25a.

The gate 26 is made of metal wiring such as stainless steel. The gate 26 has a pair of support shafts 27a that are bent inward each other from both ends of an oval loop-shaped wire. The opening/closing base end 27 includes: the pair of support shafts 27a; and a pair of shaft holes 27b provided on one end side of the body 25 across the opening 25a, with the pair of support shafts 27a being pivotally supported in the pair of shaft holes 27b.

The pair of shaft holes 27b are disposed so as to be offset in the oval direction of the gate 26 on one end side of the body 25 across the opening 25a. Correspondingly, the pair of support shafts 27a are also disposed so as to be offset in the oval direction of the wire. Thus, the gate 26 is swingably attached to one end side of the body 25 across the opening 25a via the opening/closing base end 27, in a state biased in one side in the swing direction (the direction that closes the opening 25a) using the bending deformation (elastic deformation) occurring in the wire. The gate 26 can be swung in the other side in the swing direction (the direction that opens the opening 25a) against the biasing force.

Note that in the present embodiment, the handle member 23 is an inward-opening type carabiner handle, so the gate 26 is swung toward the inside of the body 25. In the present embodiment of the handle member 23, one end side of the body 25 across the opening 25a is located on the base end side (hinge part 22 side) of the body 25, while the other end side across the opening 25a of the body 25 is located on the tip end side (opposite the hinge part 22) of the body 25.

In the handle member 23, the tip end side of the gate 26 engages the notch part 29 with the gate 26 biased on one side in the rotational direction, such that the gate 26 closes the opening 25a. In contrast, in the handle member 23, by swinging the gate 26 in the other side in the rotational direction against the biasing force, the engagement with the notch part 29 is released and the gate 26 opens the opening 25a.

The temporary fixing mechanism 24 applies the same configuration as the temporary fixing mechanism 7 in Embodiments 1 to 4. Therefore, in the present embodiment, a detailed description of the temporary fixing mechanism 24 will be omitted.

In the capped container 1E of the present embodiment having the above configuration, the capped container 1E can be carried in a hanging state by hooking the abovementioned handle member 23 to a belt loop of a pair of trousers, etc. Moreover, in the capped container 1E of the present embodiment, it is possible to carry the container while holding the handle member 23.

In the capped container 1E of the present embodiment, the handle member 23 is temporarily fixed in the first position to the cap body 21 by the temporary fixing mechanism 24, similar to the abovementioned temporary fixing mechanism 7, preventing the handle member 23 from unintentionally rotating and getting in the way. As a result, it is possible to further improve usability.

Incidentally, in the capped container 1E of the present embodiment, as illustrated in Fig. 26, a gap S is provided between the tip end of the gate 26 and the position facing the notch part 29 when the tip end side of the gate 26 is engaged with the notch part 29. The notch part 29 also has an inclined surface 29a that inclines away from the tip of the gate 26 toward the opening side at the position facing the tip of the gate 26.

In this case, for example, when an impact is applied to the tip end side of the handle member 23 due to a drop, etc., the synthetic resin body 25 flexes, eliminating the gap S, causing the tip end of the gate 26 to contact the notch part 29. At this time, the tip end of the gate 26 contacts the inclined surface 29a obliquely, avoiding a frontal collision between the tip end of the gate 26 and the notch part 29. As a result, in the capped container 1E of the present embodiment, it is possible to prevent the handle member 23 from being damaged by the load applied to the handle member 23 by releasing the engagement of the gate 26 with the notch part 29 along the inclined surface 29a, thereby dissipating the impact of a drop obliquely along the inclined surface 29a.

In particular, even when the body 25 of the handle member 23 is made of synthetic resin, it is possible to achieve a structure that prevents the handle member 23 from being damaged while reducing the weight and cost of the handle member 23 and mitigating the load applied to the handle member 23.

Further, with the handle member 23, a configuration may be adopted in which a hook part that locks the tip side (wire) of the gate 26 is provided instead of the abovementioned inclined surface 29a, as illustrated by the hook part 11b in Fig. 8.

In this case, for example, when an impact is applied to the tip end side of the handle member 23 due to a drop, etc., the synthetic resin body 25 flexes slightly by the amount of the gap S, causing the tip end of the gate 26 to contact the notch part 29. At this time, the tip end side (wire) of the gate 26 is locked by the hook part, maintaining the engagement of the gate 26 with the notch part 29 and allowing to prevent the progress of the flexural deformation of the body 25. In other words, it is possible to prevent the flexural deformation of the body 25 by the gate 26 resisting like a prop when the opening 25a side (left side in Fig. 26) of the body 25 flexes in the direction of collapsing.

Thus, in the capped container 1E of the present embodiment, it is possible to prevent the handle member 23 from being damaged by the load applied to the handle member 23.

Note that with the handle member 23, whether to provide the inclined surface 29a on the body 25 as illustrated in Fig. 26 or to provide the hook part 11b as illustrated in Fig. 8 depends on the shape such as material and thickness of the body 25, along with the overall weight of the capped container 1E when the container body 2 is filled with contents, etc., so the optimal shape that can prevent the handle member 23 from being damaged should be selected.

### (Embodiment 6)

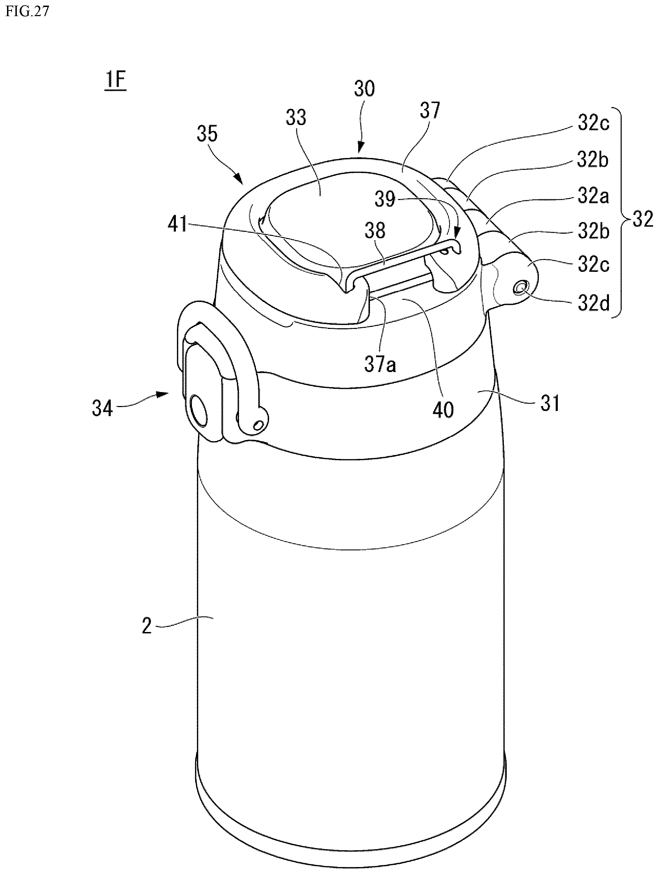

Next, as Embodiment 6 of the present invention, the capped container 1F illustrated in Figs. 27 to 29 will be described.

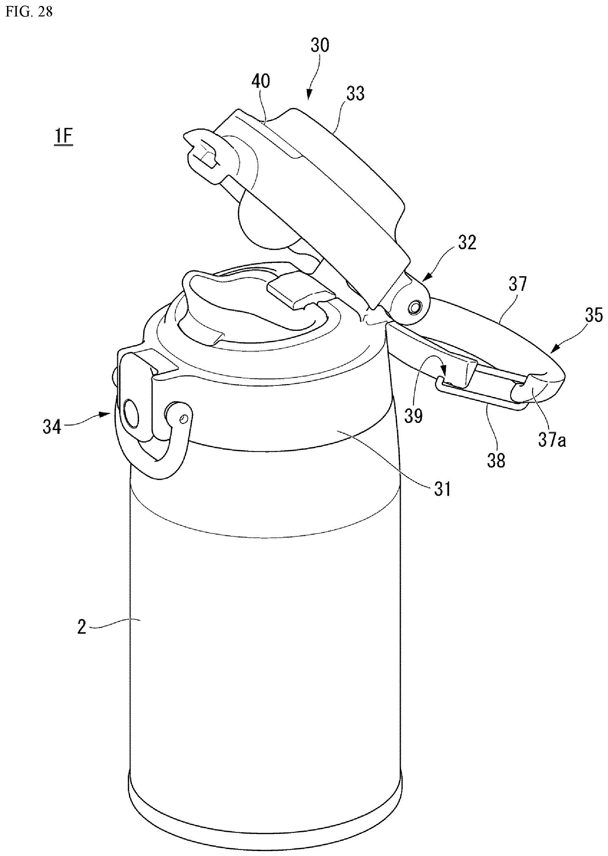

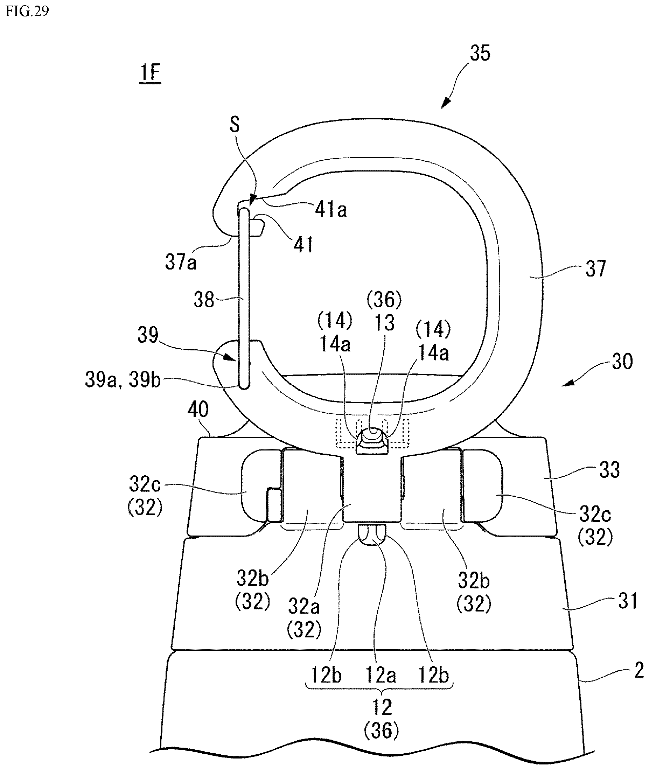

Note that Fig. 27 is a perspective view illustrating the handle member 35 of a capped container 1F positioned on the other side in the rotational direction. Fig. 28 is a perspective view illustrating the handle member 35 of a capped container 1F positioned on one side in the rotational direction. Fig. 29 is a rear view illustrating the handle member 35 of the capped container 1F positioned upward relative to the hinge part 32. In the following description, parts equivalent to those of the capped container 1A will be omitted, with the same reference numerals used in the drawings.

The capped container 1F of the present embodiment, as illustrated in Figs. 27 to 29, includes a cap unit 30 that is detachably attached to the container body 2 with an upper opening.

The cap unit 30 includes a cap body 31 that closes the upper opening of the container body 2 and has a liquid passage opening that communicates with the inside of the container body 2, a lid 33 rotatably attached to the cap body 31 via a hinge part 32, and a lid locking mechanism 34 that fixes the lid 33, which is biased in the direction of opening the liquid passage by a biasing member provided in the hinge part 32, to the cap body 31 in a position that closes the liquid passage.

The cap unit 30 includes a handle member 35 rotatably attached to the side of the cap body 31 via a hinge part 32 and a temporary fixing mechanism 36 for temporarily fixing the handle member 35 to the cap body 31 in a position with the handle member 35 rotated on one side (rear side in the present embodiment) in the rotational direction.

In the following description, the side on which the handle member 35 is attached to the cap body 31 via the hinge part 32 is referred to as the "rear side (back side)" of the capped container 1F, while the opposite side on which the lid locking mechanism 34 is provided is referred to as the "front side (front side)" of the capped container 1F.

Moreover, the side on which the cap unit 30 is located relative to the container body 2 is referred to as the "upper side," the direction in which the container body 2 is located relative to the cap unit 30 is referred to as the "lower side," and the direction connecting them is referred to as the "vertical direction." Furthermore, the direction orthogonal to the vertical direction is referred to as the "radial direction," while the direction orthogonal to the front-back direction in the radial direction is referred to as the "left-right direction." When viewing the capped container 1F from the rear side, the right direction is the right side, while the left direction is the left side, and in the rear view of Fig. 29, the right direction is the right side, while the left direction is the left side.

The hinge part 32 includes an inner hinge bearing part 32a provided on the handle member 35 side, a pair of outer hinge bearing parts 32b provided on the cap body 31 side, a pair of both-end hinge bearing parts 32c provided on the lid 33 side, and a hinge shaft 32d pivotally supported in a shaft hole penetrating these hinge bearing parts 32a, 32b, 32c in the rotational axis direction (left-right direction), with the inner hinge bearing part 32a positioned between the pair of outer hinge bearing parts 32b and with the pair of outer hinge bearing parts 32b positioned between the pair of both-end hinge bearing parts 32c.

The handle member 35 is an inward-opening type carabiner handle and has a ring-shaped body 37 with a partially opened opening 37a, along with a gate 38 that opens and closes the opening 37a. The handle member 35 is configured so as to have the base end of the gate 38 attached to one end side of the body 37 across the opening 37a via an opening/closing base end 39, with the tip side of the gate 38 swingably opening and closing.

The handle member 35 has an overall rounded square ring shape. Moreover, the handle member 35 has the opening 37a (gate 38) on one side in the left-right direction (left side in the present embodiment) of the body 37. Furthermore, the handle member 35 has an inner hinge bearing part 32a on the base end side of the body 37 and is rotatably attached to the cap body 31 and the lid 33 in the front-rear direction.

That is, with the capped container 1F of the present embodiment, the handle member 35 can rotate within a predetermined angle range (approximately 210° in the present embodiment) between the position as illustrated in Fig. 27 in which the handle member 35 rotated to the other side (front side) in the rotational direction overlaps the upper surface of the lid 33 (hereinafter, referred to as the "second position") and the position as illustrated in Fig. 28 in which the handle member 35 rotated to one side (rear side) in the rotational direction is inclined downward with respect to the hinge part 32 (hereinafter, referred to as the "first position").

In addition, the upper surface of the lid 33 is provided with a housing recess 40 for housing the handle member 35 in the first position. The housing recess 40 is provided to cut out the perimeter of the upper surface of the lid 33 so as to match the shape of the handle member 35.

The body 37 is made of heat-resistant resin, for example, and has a ring shape with one side in the left-right direction separated by the opening 37a. The base end side (hinge part 32 side) is integrally molded with the inner hinge bearing part 32a. Moreover, a concave notch part 41 is provided on the other end side of the body 37 across the opening 37a. The notch part 41 is formed by a cutout part that cuts the inner peripheral surface of the other end side of the body 37 across the opening 37a.

The gate 38 is made of metal wiring such as stainless steel. The gate 38 has a pair of support shafts 39a that are bent inward each other from both ends of an oval loop-shaped wire. The opening/closing base end 39 includes: the pair of support shafts 39a; and a pair of shaft holes 39b provided on one end side of the body 37 across the opening 37a, with the pair of support shafts 39a being pivotally supported in the pair of shaft holes 39b.

The pair of shaft holes 39b are disposed so as to be offset in the oval direction of the gate 38 on one end side of the body 37 across the opening 37a. Correspondingly, the pair of support shafts 39a are also disposed so as to be offset in the oval direction of the wire. Thus, the gate 38 is swingably attached to one end side of the body 37 across the opening 37a via the opening/closing base end 39, in a state biased in one side in the swing direction (the direction that closes the opening 37a) using the bending deformation (elastic deformation) occurring in the wire. The gate 38 can be swung in the other side in the swing direction (the direction that opens the opening 37a) against the biasing force.

Note that in the present embodiment, the handle member 35 is an inward-opening type carabiner handle, so the gate 38 is swung toward the inside of the body 37. In the present embodiment of the handle member 35, one end side of the body 37 across the opening 37a is located on the base end side (hinge part 32 side) of the body 37, while the other end side across the opening 37a of the body 37 is located on the tip end side (opposite the hinge part 32) of the body 37.

In the handle member 35, the tip end side of the gate 38 engages the notch part 41 with the gate 38 biased on one side in the rotational direction, such that the gate 38 closes the opening 37a. In contrast, with the handle member 35, by swinging the gate 38 in the other side in the rotational direction against the biasing force, the engagement with the notch part 41 is released and the gate 38 opens the opening 37a.

The temporary fixing mechanism 36 applies the same configuration as the temporary fixing mechanism 7 in Embodiments 1 to 4. Therefore, in the present embodiment, a detailed description of the temporary fixing mechanism 36 will be omitted.

In the capped container 1F of the present embodiment having the above configuration, the capped container 1F can be carried in a hanging state by hooking the abovementioned handle member 35 to a belt loop of a pair of trousers, etc. Moreover, in the capped container 1F of the present embodiment, it is possible to carry the container while holding the handle member 35.

With the capped container 1F of the present embodiment, the handle member 35 is temporarily fixed in the first position to the cap body 31 by the temporary fixing mechanism 36, similar to the abovementioned temporary fixing mechanism 7, preventing the handle member 35 from unintentionally rotating and getting in the way. As a result, it is possible to further improve usability.

Incidentally, with the capped container 1F of the present embodiment, as illustrated in Fig. 29, a gap S is provided between the tip end of the gate 38 and the position facing the notch part 41 when the tip end side of the gate 38 is engaged with the notch part 41. The notch part 41 also has an inclined surface 41a that inclines away from the tip of the gate 38 toward the opening side at the position facing the tip of the gate 38.

In this case, for example, when an impact is applied to the tip end side of the handle member 35 due to a drop, etc., the synthetic resin body 37 flexes, eliminating the gap S, causing the tip end of the gate 38 to contact the notch part 41. At this time, the tip end of the gate 38 contacts the inclined surface 41a obliquely, avoiding a frontal collision between the tip end of the gate 38 and the notch part 41. As a result, with the capped container 1F of the present embodiment, it is possible to prevent the handle member 35 from being damaged by the load applied to the handle member 35 by releasing the engagement of the gate 38 with the notch part 41 along the inclined surface 41a, thereby dissipating the impact of a drop obliquely along the inclined surface 41a.

In particular, even when the body 37 of the handle member 35 is made of synthetic resin, it is possible to achieve a structure that prevents the handle member 35 from being damaged while reducing the weight and cost of the handle member 35 and mitigating the load applied to the handle member 35.

Further, for the handle member 35, a configuration may be adopted in which a hook part that locks the tip side (wire) of the gate 38 is provided instead of the abovementioned inclined surface 41a, as illustrated by the hook part 11b in Fig. 8.

In this case, for example, when an impact is applied to the tip end side of the handle member 35 due to a drop, etc., the synthetic resin body 37 flexes slightly by the amount of the gap S, causing the tip end of the gate 38 to contact the notch part 41. At this time, the tip end side (wire) of the gate 38 is locked by the hook part, maintaining the engagement of the gate 38 with the notch part 41 and allowing to prevent the progress of the flexural deformation of the body 37. In other words, it is possible to prevent the flexural deformation of the body 37 by the gate 38 resisting like a prop when the opening 37a side (left side in Fig. 29) of the body 37 flexes in the direction of collapsing.

Thus, with the capped container 1F of the present embodiment, it is possible to prevent the handle member 35 from being damaged by the load applied to the handle member 35.

Note that with the handle member 35, whether to provide the inclined surface 41a on the body 37 as illustrated in Fig. 29 or to provide the hook part 11b as illustrated in Fig. 8 depends on the shape such as material and thickness of the body 37, along with the overall weight of the capped container 1F when the container body 2 is filled with contents, etc., so the optimal shape that can prevent the handle member 35 from being damaged should be selected.

Note that the present invention is not necessarily limited to Embodiments 1 to 6 described above, with various modifications capable of being made without departing from the spirit of the present invention.

For example, in the above embodiments, the present invention is applied to a capped container with heat and cold retention functions via a container body 2 with the abovementioned vacuum insulation structure; however, the present invention can be widely applied to capped containers equipped with cap units that can be detachably attached to the container body or shoulder member.

Moreover, the configuration of the cap unit is not particularly limited, with the present invention capable of being widely applied to cap units in which the handle member is rotatably attached to the cap body via the hinge part.

In the present invention, the configuration is not limited to the above embodiments, with the present invention capable of being widely applied to temporary fixing mechanisms for temporarily fixing the handle member to the cap body constituting the shoulder member or cap unit.

Moreover, with the present invention, the configuration is not limited to the above embodiments, with the present invention capable of being widely applied to carabiner handles.

### [Reference Signs List]

1A to 1F...capped container, 2...container body, 3...shoulder member, 4...cap unit, 5...hinge part, 6...handle member, 7...temporary fixing mechanism, 8...body, 8a...opening, 9...gate, 10...opening/closing base end, 11...notch part, 12, 12A, 12B...engaging protrusion, 13, 13A, 13B...engaging recess, 14, 14A to 14C...spring member (elastic member), 15, 15A to 15C...housing recess, 20...cap unit, 21...cap body, 22...hinge part, 23...handle member, 24...temporary fixing mechanism, 25...body, 25a...opening, 26...gate, 27...opening/closing base end, 29...notch part, 30...cap unit, 31...cap body, 32...hinge part, 33...lid, 34 ... lid locking mechanism, 35...handle member, 36...temporary fixing mechanism, 37...body, 37a...opening, 38...gate, 39...opening/closing base end, 41...notch part, S...gap

## Claims

1. A cap unit detachably attached to a container body with an upper opening, comprising:
a cap body that closes the upper opening of the container body; and
a carabiner handle rotatably attached to the cap body via a hinge part,
wherein the carabiner handle includes a ring-shaped body with an opening that is partially opened and a gate that opens and closes the opening,
the base end of the gate is swingably attached to the body via an opening/closing base end part on one end side across the opening,
a concave notch part consisting of a cutout part cutting the inner peripheral surface of the body is provided on the other end side across the opening,
the gate is biased to one side in the swing direction, with the tip side of the gate engaged with the notch part such that the gate closes the opening,
by swinging the gate to the other side in the swing direction against the bias, the engagement with the notch part is released such that the gate opens the opening, and
the notch part is provided with an inclined surface inclined in the direction away from the tip of the gate toward the side at which the cutout part opens.

2. A cap unit detachably attached to a container body with an upper opening, comprising:
a cap body that closes the upper opening of the container body; and
a carabiner handle rotatably attached to the cap body via a hinge part,
wherein the carabiner handle includes a ring-shaped body with an opening that is partially opened and a gate that opens and closes the opening,
the base end of the gate is swingably attached to the body via an opening/closing base end part on one end side across the opening,
a concave notch part consisting of a cutout part cutting the inner peripheral surface of the body is provided on the other end side across the opening,
the gate is biased to one side in the swing direction, with the tip side of the gate engaged with the notch part such that the gate closes the opening,
by swinging the gate to the other side in the swing direction against the bias, the engagement with the notch part is released such that the gate opens the opening, and
the notch part is provided with a hook part that locks the tip side of the gate.

3. The cap unit according to claim 1 or 2, wherein the body is made of synthetic resin.

4. A capped container comprising: the cap unit according to claim 1 or 2; and
a container body to which the cap unit is attached.

5. A capped container comprising: a container body with an upper opening;
a shoulder member attached to the outer peripheral part of the upper side of the container body;
a cap unit detachably attached to the container body or the shoulder member; and
a carabiner handle rotatably attached to the shoulder member via a hinge part,
wherein the carabiner handle includes a ring-shaped body with an opening that is partially opened and a gate that opens and closes the opening,
the base end of the gate is swingably attached to the body via an opening/closing base end part on one end side across the opening,
a concave notch part consisting of a cutout part cutting the inner peripheral surface of the body is provided on the other end side across the opening,
the gate is biased to one side in the swing direction, with the tip side of the gate engaged with the notch part such that the gate closes the opening,
by swinging the gate to the other side in the swing direction against the bias, the engagement with the notch part is released such that the gate opens the opening, and
the notch part is provided with an inclined surface inclined in the direction away from the tip of the gate toward the side at which the cutout part opens.

6. A capped container comprising: a container body with an upper opening;
a shoulder member attached to the outer peripheral part of the upper side of the container body;
a cap unit detachably attached to the container body or the shoulder member; and
a carabiner handle rotatably attached to the shoulder member via a hinge part,
wherein the carabiner handle includes a ring-shaped body with an opening that is partially opened and a gate that opens and closes the opening,
the base end of the gate is swingably attached to the body via an opening/closing base end part on one end side across the opening,
a concave notch part consisting of a cutout part cutting the inner peripheral surface of the body is provided on the other end side across the opening,
the gate is biased to one side in the swing direction, with the tip side of the gate engaged with the notch part such that the gate closes the opening,
by swinging the gate to the other side in the swing direction against the bias, the engagement with the notch part is released such that the gate opens the opening, and
the notch part is provided with a hook part that locks the tip side of the gate.

7. The capped container according to claim 5 or 6, wherein the body is made of synthetic resin.
